# EUROPEAN PATENT SPECIFICATION

(11) **EP 4 138 162 B1**
(45) Date of publication and mention of the grant of the patent: **28.01.2026**
(21) Application number: 21787933.7
(22) Date of filing: 19.01.2021
(51) Int. Cl.: H01M 8/0232, H01M 8/0245, H01M 8/0247, H01M 8/12, H01M 8/1213, C25B 1/042, C25B 9/01, C25B 9/65, C25B 9/77

(54) **ELECTROCHEMICAL CELL DEVICE**
ELEKTROCHEMISCHE ZELLENVORRICHTUNG
DISPOSITIF DE PILE ÉLECTROCHIMIQUE

(30) Priority: 15.04.2020 JP 2020072919
(43) Date of publication of application: 22.02.2023
(73) Proprietor: SUMITOMO ELECTRIC INDUSTRIES, LTD., Osaka-shi, Osaka 541-0041 (JP)
(72) Inventor: NUMATA, Koma, Osaka-shi, Osaka 541-0041 (JP); MAJIMA, Masatoshi, Osaka-shi, Osaka 541-0041 (JP); OGAWA, Mitsuyasu, Osaka-shi, Osaka 541-0041 (JP); MIZUHARA, Naho, Osaka-shi, Osaka 541-0041 (JP); NODA, Yohei, Osaka-shi, Osaka 541-0041 (JP)
(74) Representative: Boult Wade Tennant LLP
(86) International application number: PCT/JP2021/001578
(87) International publication number: WO 2021/210231

(56) References cited:
- JP-A- 2005 317 241
- JP-A- 2006 260 994
- JP-A- 2006 260 994
- JP-A- 2010 015 977
- JP-A- 2013 069 521
- JP-A- 2013 069 521
- US-A1- 2009 297 906

## Description

### TECHNICAL FIELD

The present disclosure relates to an electrochemical cell device. The present application claims a priority based on Japanese Patent Application No. 2020-072919 filed on April 15, 2020.

### BACKGROUND ART

PTL 1 (WO 2019/244480) describes a fuel cell. The fuel cell described in PTL 1 includes a solid electrolyte layer, an anode, a cathode, an anode side current collector, and a cathode side current collector.

The anode and the cathode sandwich the solid electrolyte layer (hereinafter, the solid electrolyte layer sandwiched between the anode and the cathode will be referred to as "cell"). The anode side current collector and the cathode side current collector sandwich the cell. Each of the anode side current collector and the cathode side current collector is constituted of a metal porous body sheet composed of a metal porous body having a framework with a three-dimensional network structure.

US2009/297906 discloses a solid oxide fuel cell device comprising a unit cell having a first surface and a second surface; a first porous metal current collector having a third surface facing the first surface; and a second porous metal current collector having a fourth surface facing the second surface, wherein the cell is warped to protrude from the second surface toward the first surface, the third surface is provided with a recess at a position facing a central portion of the first surface, the fourth surface includes a protrusion at a position facing a central portion of the second surface.

### CITATION LIST

### PATENT LITERATURE

PTL 1: WO 2019/244480

### SUMMARY OF INVENTION

An electrochemical cell device according to the present invention is provided as defined by claim 1.

### BRIEF DESCRIPTION OF DRAWINGS

Fig. 1A is a cross sectional view of an electrochemical cell device 100.
Fig. 1B is an enlarged cross sectional view of a cell 10.
Fig. 2 is a plan view of cell 10.
Fig. 3 is a schematic cross sectional view showing a shape of warpage of cell 10.
Fig. 4 is a plan view of a current collector 20.
Fig. 5 is a cross sectional view at V-V of Fig. 4.
Fig. 6 is a plan view of a current collector 30.
Fig. 7 is a cross sectional view at VII-VII of Fig. 6.
Fig. 8 is a plan view of a current collector 20 of an electrochemical cell device 200.
Fig. 9 is a cross sectional view at IX-IX of Fig. 8.
Fig. 10 is a plan view of a current collector 30 of electrochemical cell device 200.
Fig. 11 is a cross sectional view at XI-XI of Fig. 10.
Fig. 12 is a cross sectional view of a current collector 20 of an electrochemical cell device 300.
Fig. 13 is a cross sectional view of a current collector 30 of electrochemical cell device 300.

### DETAILED DESCRIPTION

### [Problem to be Solved by the Present Disclosure]

In the fuel cell according to PTL 1, a cell may be warped. When the cell is warped, spaces are formed between the cell and the anode side current collector and between the cell and the cathode side current collector (contact between the cell and each current collector is deteriorated).

The present disclosure provides an electrochemical cell device to reduce a space between a cell and a current collector.

### [Advantageous Effect of the Present Disclosure]

According to the electrochemical cell device of the present disclosure, the space between the cell and the current collector can be reduced.

### [Description of Embodiments]

First, embodiments of the present disclosure are listed and described.
(1) An electrochemical cell device according to one embodiment includes: a cell having a first main surface and a second main surface opposite to the first main surface; a first current collector having a third main surface facing the first main surface; and a second current collector having a fourth main surface facing the second main surface. The cell is warped to protrude from the second main surface toward the first main surface. The third main surface is provided with a recess at a position facing a central portion of the first main surface. The fourth main surface includes a protrusion at a position facing a central portion of the second main surface. Each of the first current collector and the second current collector is constituted of one or more metal porous body sheets each composed of a metal porous body having a framework with a three-dimensional network structure. The central portion of the first main surface includes a portion of the first main surface with a longest distance from a flat reference surface when the cell is placed on the reference surface such that the second main surface faces the reference surface. The central portion of the second main surface includes a portion of the second main surface with a longest distance from the reference surface when the cell is disposed on the reference surface such that the second main surface faces the reference surface.

According to the electrochemical cell device of (1), a space between the cell and each current collector can be reduced.

(2) In the electrochemical cell device of (1), the one or more metal porous body sheets of the first current collector may be a first metal porous body sheet and a second metal porous body sheet. The first metal porous body sheet and the second metal porous body sheet may be disposed side by side in a plane orthogonal to a thickness direction of the first current collector. A first through hole may be formed in the second metal porous body sheet at a position corresponding to the recess so as to extend through the second metal porous body sheet in a thickness direction of the second metal porous body sheet. The first metal porous body sheet may be disposed in the first through hole. A thickness of the second metal porous body sheet may be more than a thickness of the first metal porous body sheet. The recess may be defined by an inner peripheral surface of the first through hole and a main surface of the first metal porous body sheet.

According to the electrochemical cell device of (2), the space between the cell and the current collector can be reduced.

(3) In the electrochemical cell device of (2), a value obtained by subtracting the thickness of the first metal porous body sheet from the thickness of the second metal porous body sheet may be equal to a warpage amount of the cell.

According to the electrochemical cell device of (3), the space between the cell and the current collector can be further reduced.

(4) In the electrochemical cell device of (1), the one or more metal porous body sheets of the first current collector may be a first metal porous body sheet and a second metal porous body sheet. The first metal porous body sheet and the second metal porous body sheet may be disposed to be stacked on each other such that the second metal porous body sheet is located on the third main surface side in a thickness direction of the first current collector. A first through hole may be formed in the second metal porous body sheet at a position corresponding to the recess so as to extend through the second metal porous body sheet in a thickness direction of the second metal porous body sheet.

(5) In the electrochemical cell device of any one of (1) to (4), the one or more metal porous body sheets of the second current collector may be a third metal porous body sheet and a fourth metal porous body sheet. The third metal porous body sheet and the fourth metal porous body sheet may be disposed side by side in a plane orthogonal to a thickness direction of the second current collector. A second through hole may be formed in the fourth metal porous body sheet at a position corresponding to the protrusion so as to extend through the fourth metal porous body sheet in a thickness direction of the fourth metal porous body sheet. The third metal porous body sheet may be disposed in the second through hole. A thickness of the third metal porous body sheet may be more than a thickness of the fourth metal porous body sheet.

According to the electrochemical cell device of (5), the space between the cell and the current collector can be reduced.

(6) In the electrochemical cell device of (1) to (4), a value obtained by subtracting the thickness of the fourth metal porous body sheet from the thickness of the third metal porous body sheet may be equal to a warpage amount of the cell.

According to the electrochemical cell device of (6), the space between the cell and the current collector can be further reduced.

(7) In the electrochemical cell device of any one of (1) to (4), the one or more metal porous body sheets of the second current collector may be a third metal porous body sheet and a fourth metal porous body sheet. The third metal porous body sheet and the fourth metal porous body sheet may be disposed to be stacked on each other such that the fourth metal porous body sheet is located on the fourth main surface side in a thickness direction of the second current collector. The fourth metal porous body sheet may constitute the protrusion.

According to the electrochemical cell device of (7), the space between the cell and the current collector can be reduced.

(8) In the electrochemical cell device of (1) to (7), the first current collector may be a cathode side current collector, and the second current collector may be an anode side current collector.

According to the electrochemical cell device of (8), the space between the cell and the current collector can be reduced.

(9) In the electrochemical cell device of (8), the framework of each of the one or more metal porous body sheets of the first current collector may contain nickel and cobalt. A coating weight of each of the one or more metal porous body sheets of the first current collector may be 900 g/m² or less.

According to the electrochemical cell device of (9), the space between the cell and the current collector can be reduced.
(10) In the electrochemical cell device of (8), the framework of each of the one or more metal porous body sheets of the second current collector may contain nickel. A coating weight of each of the one or more metal porous body sheets of the second current collector may be 1000 g/m² or less.
(11) In the electrochemical cell device according to (1) to (10), a value obtained by dividing a warpage amount of the cell by a maximum width of the cell when viewed in a plan view may be 1/1000 or more.

According to the electrochemical cell device of (11), even when the warpage of the cell is large, the space between the cell and the current collector can be reduced.

(12) The electrochemical cell device of (1) to (11) may be a solid oxide fuel cell.

According to the electrochemical cell device of (12), contact between the cell and the current collector can be improved, thus resulting in increased output voltage in the solid oxide fuel cell.

(13) The electrochemical cell device of (1) to (11) may be a solid oxide electrolysis cell.

According to the electrochemical cell device of (13), contact between the cell and the current collector can be improved, thus resulting in lowered electrolytic voltage in the solid oxide electrolysis cell.

### [Details of Embodiments of the Present Disclosure]

Next, embodiments of the present disclosure will be described with reference to figures. Here, the same or corresponding portions are denoted by the same reference characters, and the same explanation will not be described repeatedly.

### (First Embodiment)

Hereinafter, a configuration of an electrochemical cell device (hereinafter, referred to as "electrochemical cell device 100") according to a first embodiment will be described.

Electrochemical cell device 100 is a solid oxide fuel cell (SOFC). Although electrochemical cell device 100 may be a solid oxide electrolysis cell (SOEC), the SOFC will be described below as an exemplary electrochemical cell device 100.

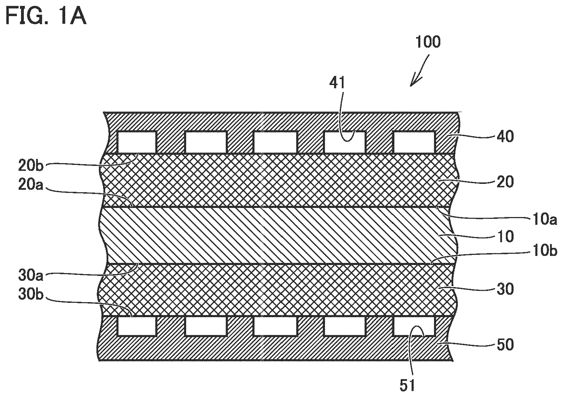

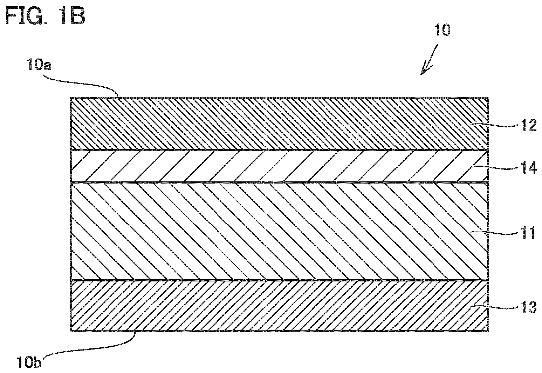

Fig. 1A is a cross sectional view of electrochemical cell device 100. Fig. 1A shows a structure of a single-cell included in electrochemical cell device 100. Electrochemical cell device 100 is formed by stacking a plurality of single-cell structures. Further, Fig. 1A does not illustrate warpage of a cell 10, a recess 20c, and a protrusion 30c, which will be described later. Fig. 1B is an enlarged cross sectional view of cell 10. As shown in Figs. 1A and 1B, electrochemical cell device 100 includes cell 10, a current collector 20, a current collector 30, an interconnector 40, and an interconnector 50.

Cell 10 has a main surface 10a and a main surface 10b. Main surface 10b is a surface opposite to main surface 10a. Cell 10 includes a solid electrolyte layer 11, a cathode 12, an anode 13, and an intermediate layer 14.

Solid electrolyte layer 11 is a layer composed of a solid electrolyte. For example, solid electrolyte layer 11 is composed of an oxide (YSZ) of zirconium (Zr) doped with yttrium (Y). Cathode 12 is composed of, for example, LSC (oxide of lanthanum (La) strontium (Sr) cobalt (Co)). Anode 13 is composed of, for example, a mixture of YSZ and an oxide of nickel (Ni₂O). Intermediate layer 14 is composed of, for example, an oxide (GDC) of cerium (Ce) doped with gadolinium (Gd).

Cathode 12 constitutes a main surface 10a of cell 10. Anode 13 constitutes a main surface 10b of cell 10. Solid electrolyte layer 11 is disposed between cathode 12 and anode 13. Intermediate layer 14 is disposed between solid electrolyte layer 11 and cathode 12. Solid electrolyte layer 11 and anode 13 are in contact with each other.

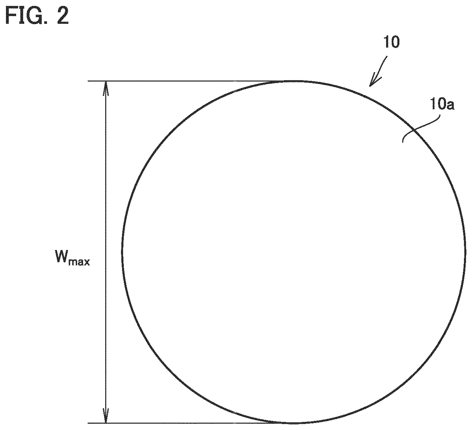

Fig. 2 is a plan view of cell 10. As shown in Fig. 2, cell 10 has a circular shape when viewed in a plan view. However, the planar shape of cell 10 is not limited thereto. Cell 10 may have a quadrangular shape when viewed in a plan view.

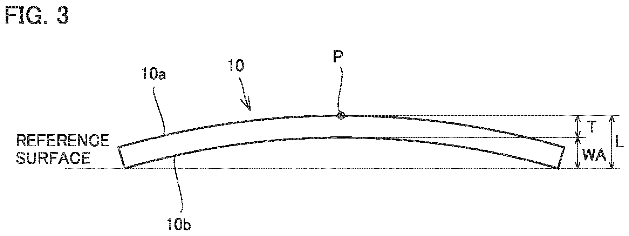

Fig. 3 is a schematic cross sectional view showing a shape of warpage of cell 10. As shown in Fig. 3, cell 10 is warped. For example, cell 10 is warped to protrude from the main surface 10b side toward the main surface 10a side. A warpage amount of cell 10 (hereinafter, referred to as "warpage amount WA") is, for example, 100 µm or more. Warpage amount WA may be 1000 µm or more.

Warpage amount WA is measured by the following method. First, cell 10 is placed on a flat reference surface. Second, LK-G35 provided by Keyence is used to measure a distance (hereinafter, referred to as "distance L") between the reference surface and a position (hereinafter, referred to as "apex P") on main surface 10a with the longest distance from the reference surface. Apex P is located at the central portion of cell 10 (the central portion of main surface 10a) when viewed in a plan view. Third, the thickness of cell 10 (hereinafter, referred to as "thickness T") is subtracted from distance L. In this way, warpage amount WA is measured.

The maximum width of cell 10 when viewed in a plan view is defined as a width Wₘₐₓ (see Fig. 2). A value obtained by dividing warpage amount WA by width Wₘₐₓ is, for example, 1/1000 or more. The value obtained by dividing warpage amount WA by width Wₘₐₓ may be 1/100 or more. When the planar shape of cell 10 is a circular shape, width Wₘₐₓ is equal to the diameter of the circular shape. When the planar shape of the cell is a quadrangular shape, width Wₘₐₓ is equal to the length of the diagonal of the quadrangular shape.

As shown in Fig. 1A, current collector 20 is disposed on main surface 10a, and current collector 30 is disposed on main surface 10b. From another viewpoint, it can be said that cell 10 is sandwiched between current collector 20 and current collector 30. Current collector 20 is a cathode side current collector, and current collector 30 is an anode side current collector.

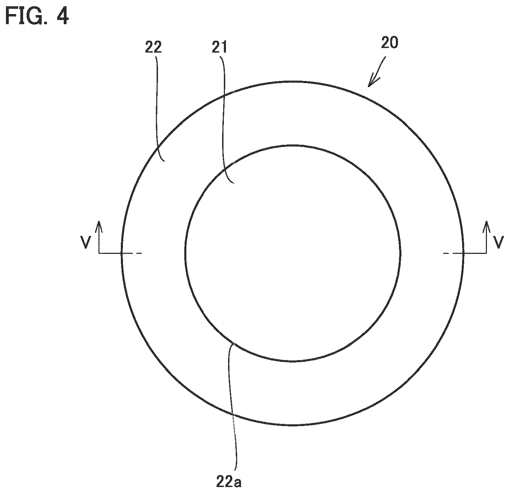

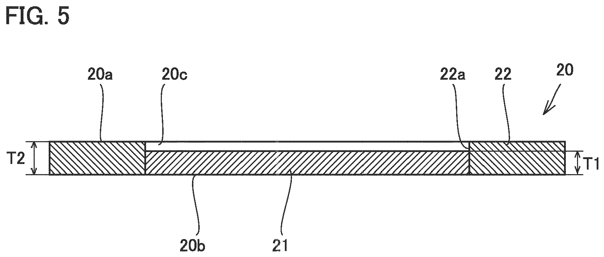

Current collector 20 has a main surface 20a and a main surface 20b. Main surface 20a faces main surface 10a. Main surface 20b is a surface opposite to main surface 20a. Fig. 4 is a plan view of current collector 20. Fig. 5 is a cross sectional view at V-V of Fig. 4. As shown in Figs. 4 and 5, main surface 20a is provided with recess 20c. Main surface 20a is depressed toward the main surface 20b side in recess 20c. Recess 20c is disposed at a position facing the central portion of main surface 10a.

Current collector 20 is constituted of a metal porous body sheet 21 and a metal porous body sheet 22. Each of metal porous body sheet 21 and metal porous body sheet 22 is composed of a metal porous body having a framework with a three-dimensional network structure.

The framework of the metal porous body of each of metal porous body sheet 21 and metal porous body sheet 22 contains, for example, nickel (Ni) and cobalt. The coating weight of each of metal porous body sheet 21 and metal porous body sheet 22 is preferably 900 g/m² or less. The coating weight of metal porous body sheet 21 (metal porous body sheet 22) is a value obtained by dividing the weight of metal porous body sheet 21 (metal porous body sheet 22) by the area of the main surface of metal porous body sheet 21 (metal porous body sheet 22).

Current collector 20 has a circular shape when viewed in a plan view. Metal porous body sheet 21 has a circular shape when viewed in a plan view. Metal porous body sheet 22 has an annular shape when viewed in a plan view. That is, a through hole 22a is formed in metal porous body sheet 22 so as to extend through metal porous body sheet 22 in the thickness direction of metal porous body sheet 22. Through hole 22a is formed at a position corresponding to recess 20c.

The thickness (hereinafter, referred to as "thickness T2") of metal porous body sheet 22 is larger than the thickness (hereinafter, referred to as "thickness T1") of metal porous body sheet 21. Metal porous body sheet 21 and metal porous body sheet 22 are disposed side by side (disposed not to be stacked on each other) in a plane orthogonal to the thickness direction of current collector 20. Metal porous body sheet 21 is disposed in through hole 22a. Therefore, metal porous body sheet 21 and through hole 22a constitute recess 20c.

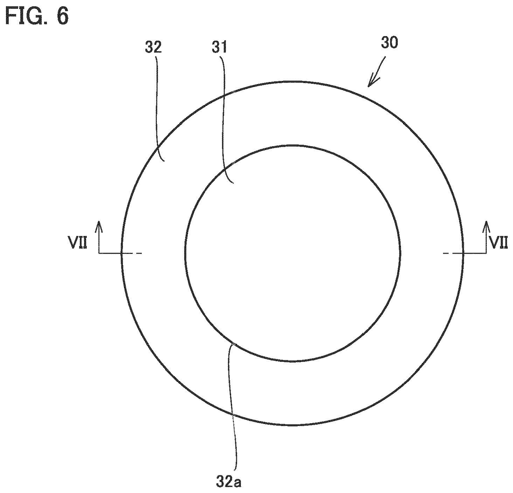

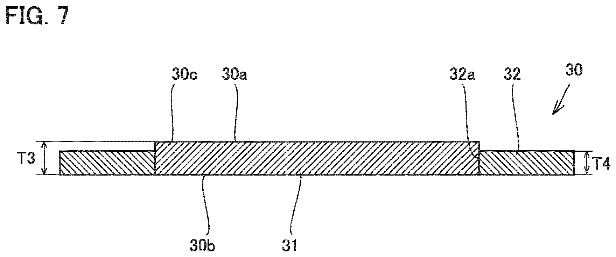

Current collector 30 has a main surface 30a and a main surface 30b. Main surface 30a faces main surface 10b. Main surface 30b is a surface opposite to main surface 30a. Fig. 6 is a plan view of current collector 30. Fig. 7 is a cross sectional view at VII-VII of Fig. 6. As shown in Figs. 6 and 7, main surface 30a has a protrusion 30c. At protrusion 30c, main surface 30a protrudes opposite to main surface 30b. Protrusion 30c is disposed at a position facing the central portion of main surface 10b.

Current collector 30 is constituted of a metal porous body sheet 31 and a metal porous body sheet 32. Each of metal porous body sheet 31 and metal porous body sheet 32 is constituted of a metal porous body having a framework with a three-dimensional network structure.

The framework of the metal porous body of each of metal porous body sheet 31 and metal porous body sheet 32 contains, for example, nickel. The coating weight of each of metal porous body sheet 31 and metal porous body sheet 32 is preferably 1000 g/m² or less. The coating weight of metal porous body sheet 31 (metal porous body sheet 32) is a value obtained by dividing the weight of metal porous body sheet 31 (metal porous body sheet 32) by the area of the main surface of metal porous body sheet 31 (metal porous body sheet 32).

Current collector 30 has a circular shape when viewed in a plan view. Metal porous body sheet 31 has a circular shape when viewed in a plan view. Metal porous body sheet 32 has an annular shape when viewed in a plan view. That is, a through hole 32a is formed in metal porous body sheet 32 so as to extend through metal porous body sheet 32 in the thickness direction of metal porous body sheet 32. Through hole 32a is formed at a position corresponding to protrusion 30c.

The thickness (hereinafter, referred to as "thickness T3") of metal porous body sheet 31 is larger than the thickness (hereinafter, referred to as "thickness T4") of metal porous body sheet 32. Metal porous body sheet 31 and metal porous body sheet 32 are disposed side by side (disposed not to be stacked on each other) in a plane orthogonal to the thickness direction of current collector 30. Metal porous body sheet 31 is disposed in through hole 32a. Therefore, metal porous body sheet 31 constitutes protrusion 30c.

A value obtained by subtracting thickness T1 from thickness T2 is preferably equal to warpage amount WA. A value obtained by subtracting thickness T4 from thickness T3 is preferably equal to warpage amount WA. It should be noted that a case where the value obtained by subtracting thickness T1 from thickness T2 falls within a range of 0.95 time or more and 1.05 times or less as large as warpage amount WA is included in the case where "the value obtained by subtracting thickness T1 from thickness T2 is equal to warpage amount WA", and a case where the value obtained by subtracting thickness T4 from thickness T3 falls within a range of 0.95 time or more and 1.05 times or less as large as warpage amount WA is included in the case where "the value obtained by subtracting thickness T4 from thickness T3 is equal to warpage amount WA".

Metal porous body sheet 22 may be concentrically divided into a plurality of metal porous body sheets. In this case, a metal porous body sheet disposed on an outer side is thicker. Metal porous body sheet 32 may be concentrically divided into a plurality of metal porous body sheets. In this case, a metal porous body sheet disposed on an outer side is thinner.

As shown in Fig. 1A, interconnector 40 is disposed on main surface 20b and interconnector 50 is disposed on main surface 30b. From another viewpoint, it can be said that cell 10, current collector 20, and current collector 30 are sandwiched between interconnector 40 and interconnector 50. A groove 41 is formed in the main surface of interconnector 40 on the current collector 20 side, and a groove 51 is formed in the main surface of interconnector 50 on the current collector 30 side. Each of interconnector 40 and interconnector 50 is composed of an electrically conductive material.

Hereinafter, effects of electrochemical cell device 100 will be described.

In electrochemical cell device 100, since cell 10 is warped to protrude from main surface 10b toward main surface 10a, spaces are formed between main surface 10a and main surface 20a and between main surface 10b and main surface 30a when main surface 20a and main surface 30a are flat. This results in an increased contact electrical resistance value between cell 10 and current collector 20, an increased contact electrical resistance value between cell 10 and current collector 30, and a decreased output voltage from electrochemical cell device 100.

However, in electrochemical cell device 100, since main surface 20a is provided with recess 20c and main surface 30a has protrusion 30c, main surface 20a is facilitated to conform to the shape of main surface 10a and main surface 30a is facilitated to conform to the shape of main surface 10b, thereby reducing the spaces between main surface 10a and main surface 20a and between main surface 10b and main surface 30a.

Therefore, according to electrochemical cell device 100, the contact electrical resistance value between cell 10 and current collector 20 and the contact electrical resistance value between cell 10 and current collector 30 can be decreased, and the output voltage from electrochemical cell device 100 can be improved.

It should be noted that when electrochemical cell device 100 is an SOEC, the contact electrical resistance value between cell 10 and current collector 20 and the contact electrical resistance value between cell 10 and current collector 30 are decreased, with the result that the electrolytic voltage in electrochemical cell device 100 can be lowered.

When the framework of the metal porous body of each of metal porous body sheet 21 and metal porous body sheet 22 contains nickel and cobalt and the coating weight of the metal porous body of each of metal porous body sheet 21 and metal porous body sheet 22 is 900 g/m² or less, deformability of each of metal porous body sheet 21 and metal porous body sheet 22 can be ensured, so that main surface 20a is more facilitated to conform to the shape of main surface 10a.

When the framework of the metal porous body of each of metal porous body sheet 31 and metal porous body sheet 32 contains nickel and the coating weight of the metal porous body of each of metal porous body sheet 31 and metal porous body sheet 32 is 900 g/m² or less, deformability of each of metal porous body sheet 31 and metal porous body sheet 32 can be ensured, so that main surface 30a is more facilitated to conform to the shape of main surface 10b.

### (Power Generation Test)

Hereinafter, a power generation test performed to confirm the effects of electrochemical cell device 100 will be described.

### <Samples>

Electrochemical cells of samples 1 to 6 were provided for a power generation test. In each of samples 1 to 6, the shapes of cell 10, current collector 20, and current collector 30 were as shown in Table 1. It should be noted that although not shown in Table 1, in each of samples 1 to 6, the thickness and diameter of cell 10 were 0.4 mm and 100 mm, respectively.

**[Table 1]**

| | Warpage Amount WA | Current Collector 20 | Current Collector 30 |
|---|---|---|---|
| Sample 1 | 100 µm | Metal Porous Body Sheet 21 (Thickness T1 = 400 µm) + Metal Porous Body Sheet 22 (Thickness T2 = 500 µm) | Metal Porous Body Sheet 31 (Thickness T3 = 500 µm) + Metal Porous Body Sheet 32 (Thickness T4 = 400 µm) |
| Sample 2 | 300 µm | Metal Porous Body Sheet 21 (Thickness T1 = 200 µm) + Metal Porous Body Sheet 22 (Thickness T2 = 500 µm) | Metal Porous Body Sheet 31 (Thickness T3 = 500 µm) + Metal Porous Body Sheet 32 (Thickness T4 = 200 µm) |
| Sample 3 | 1000 µm | Metal Porous Body Sheet 21 (Thickness T1 = 100 µm) + Metal Porous Body Sheet 22 (Thickness T2 = 1100 µm) | Metal Porous Body Sheet 31 (Thickness T3 = 1100 µm) + Metal Porous Body Sheet 32 (Thickness T4 = 100 µm) |
| Sample 4 | 2000 µm | Metal Porous Body Sheet 21 (Thickness T1 = 100 µm) + Metal Porous Body Sheet 22 (Thickness T2 = 2100 µm) | Metal Porous Body Sheet 31 (Thickness T3 = 2100 µm) + Metal Porous Body Sheet 32 (Thickness T4 = 100 µm) |
| Sample 5 | 100 µm | One Metal Porous Body Sheet Having Thickness of 500 µm | One Metal Porous Body Sheet Having Thickness of 500 µm |
| Sample 6 | 1000 µm | One Metal Porous Body Sheet Having Thickness of 1100 µm | One Metal Porous Body Sheet Having Thickness of 1100 µm |

As shown in Table 1, in each of samples 1 and 5, warpage amount WA was 100 µm. In sample 2, warpage amount WA was 300 µm. In each of samples 3 and 6, warpage amount WA was 1000 µm. In sample 4, warpage amount WA was 2000 µm.

In sample 1, a metal porous body sheet 21 having a thickness of 400 µm and a metal porous body sheet 22 having a thickness of 500 µm were used as current collector 20, and a metal porous body sheet 31 having a thickness of 500 µm and a metal porous body sheet 32 having a thickness of 400 µm were used as current collector 30.

In sample 2, a metal porous body sheet 21 having a thickness of 200 µm and a metal porous body sheet 22 having a thickness of 500 µm were used as current collector 20, and a metal porous body sheet 31 having a thickness of 500 µm and a metal porous body sheet 32 having a thickness of 200 µm were used as current collector 30.

In sample 3, a metal porous body sheet 21 having a thickness of 100 µm and a metal porous body sheet 22 having a thickness of 1100 µm were used as current collector 20, and a metal porous body sheet 31 having a thickness of 1100 µm and a metal porous body sheet 32 having a thickness of 100 µm were used as current collector 30.

In sample 4, a metal porous body sheet 21 having a thickness of 100 µm and a metal porous body sheet 22 having a thickness of 2100 µm were used as current collector 20, and a metal porous body sheet 31 having a thickness of 2100 µm and a metal porous body sheet 32 having a thickness of 100 µm were used as current collector 30.

In sample 5, one metal porous body sheet having a thickness of 500 µm was used as current collector 20, and one metal porous body sheet having a thickness of 500 µm was used as current collector 30.

In sample 6, one metal porous body sheet having a thickness of 1100 µm was used as current collector 20, and one metal porous body sheet having a thickness of 1100 µm was used as current collector 30.

### <Test Results>

Table 2 shows an initial value of an output voltage between the anode and the cathode when a current of 0.5 A/cm² flows between the anode and the cathode at 750°C.

**[Table 2]**

| | Output Voltage |
|---|---|
| Sample 1 | 0.85 V |
| Sample 2 | 0.86 V |
| Sample 3 | 0.89 V |
| Sample 4 | 0.90 V |
| Sample 5 | 0.78 V |
| Sample 6 | 0.70 V |

As shown in Table 2, the output voltage of sample 1 was more than the output voltage of sample 5. The output voltage of sample 3 was more than the output voltage of sample 6.

In view of these comparisons, it was also experimentally revealed that since main surface 20a of current collector 20 is provided with recess 20c and main surface 30a of current collector 30 has protrusion 30c, the space between cell 10 and current collector 20 and the space between cell 10 and current collector 30 can be decreased and the output voltage from electrochemical cell device 100 can be increased.

As warpage amount WA is larger, the spaces are more likely to be formed between cell 10 and current collector 20 and between cell 10 and current collector 30, but a surface area of cell 10 contributing to an electrochemical reaction is increased.

The output voltage of sample 6 was less than the output voltage of sample 5. This is presumably due to the following reason: since warpage amount WA of sample 6 was more than warpage amount WA of sample 5, the space between cell 10 and current collector 20 and the space between cell 10 and current collector 30 were increased, thereby increasing the contact electrical resistance between cell 10 and current collector 20 and the contact electrical resistance between cell 10 and current collector 30.

On the other hand, in each of samples 1 to 4, as warpage amount WA was larger, the output voltage was increased. In each of samples 1 to 4, each of the value obtained by subtracting thickness T1 from thickness T2 and the value obtained by subtracting thickness T4 from thickness T3 coincided with warpage amount WA.

In view of this, it was experimentally revealed that by increasing warpage amount WA while each of the value obtained by subtracting thickness T1 from thickness T2 and the value obtained by subtracting thickness T4 from thickness T3 coincides with warpage amount WA, the surface area of cell 10 contributing to the electrochemical reaction can be increased, in other words, the output voltage from electrochemical cell device 100 can be further increased, while reducing the space between cell 10 and current collector 20 and the space between cell 10 and current collector 30.

### (Second Embodiment)

Hereinafter, a configuration of an electrochemical cell device (hereinafter, referred to as "electrochemical cell device 200") according to a second embodiment will be described. Here, the following mainly describes differences from the configuration of electrochemical cell device 100, and the same explanation will not be described repeatedly.

Electrochemical cell device 200 includes a cell 10, a current collector 20, a current collector 30, an interconnector 40, and an interconnector 50. Cell 10 is warped to protrude from main surface 10b toward main surface 10a. Main surface 20a is provided with a recess 20c, and main surface 30a has a protrusion 30c. Regarding these points, the configuration of electrochemical cell device 200 is the same as the configuration of electrochemical cell device 100.

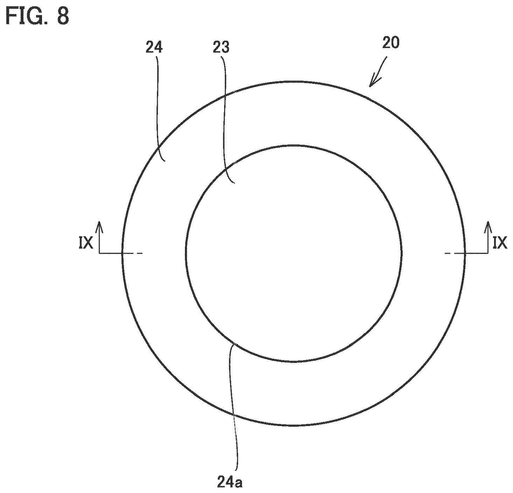

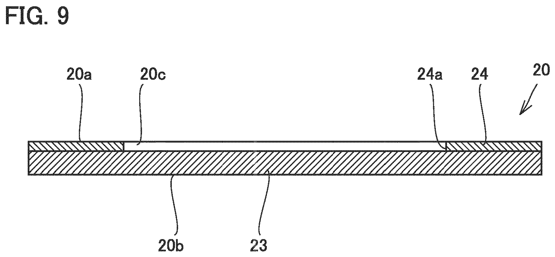

Fig. 8 is a plan view of current collector 20 of electrochemical cell device 200. Fig. 9 is a cross sectional view at IX-IX of Fig. 8. As shown in Figs. 8 and 9, in electrochemical cell device 200, current collector 20 has a metal porous body sheet 23 and a metal porous body sheet 24. Metal porous body sheet 23 has a circular shape when viewed in a plan view, for example. Metal porous body sheet 24 has an annular shape when viewed in a plan view, for example.

A through hole 24a is formed in metal porous body sheet 24 so as to extend through metal porous body sheet 24 in the thickness direction of metal porous body sheet 24. Through hole 24a is disposed at a position corresponding to recess 20c. Metal porous body sheet 23 and metal porous body sheet 24 are disposed to be stacked on each other in the thickness direction of current collector 20. Metal porous body sheet 24 is disposed on the main surface 20a side. As a result, through hole 24a and metal porous body sheet 23 constitute recess 20c.

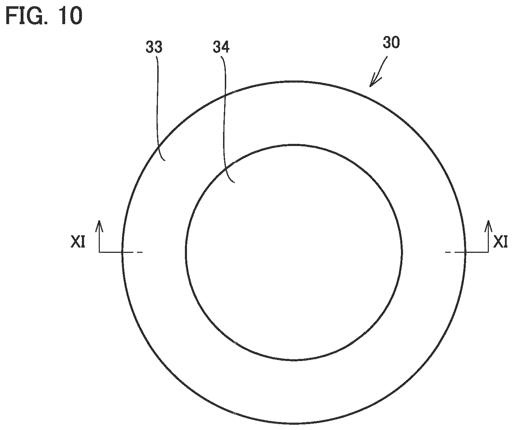

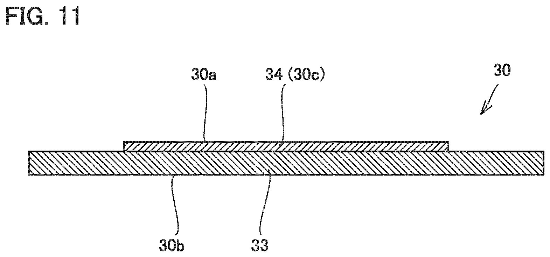

Fig. 10 is a plan view of current collector 30 of electrochemical cell device 200. Fig. 11 is a cross sectional view at XI-XI of Fig. 10. As shown in Figs. 10 and 11, current collector 30 has a metal porous body sheet 33 and a metal porous body sheet 34. Each of metal porous body sheet 33 and metal porous body sheet 34 has a circular shape when viewed in a plan view, for example. The diameter of metal porous body sheet 33 is larger than the diameter of metal porous body sheet 34.

Metal porous body sheet 33 and metal porous body sheet 34 are stacked on each other in the thickness direction of current collector 30. Metal porous body sheet 34 is disposed on the main surface 30a side so as to correspond to the position of protrusion 30c. As a result, metal porous body sheet 34 constitutes protrusion 30c.

Hereinafter, effects of electrochemical cell device 200 will be described.

As with electrochemical cell device 100, since main surface 20a is provided with recess 20c and main surface 30a has protrusion 30c in electrochemical cell device 200, main surface 20a is facilitated to conform to the shape of main surface 10a and main surface 30a is facilitated to conform to the shape of main surface 10b, thereby reducing the spaces between main surface 10a and main surface 20a and between main surface 10b and main surface 30a. As a result, according to electrochemical cell device 200, the contact electrical resistance value between cell 10 and current collector 20 and the contact electrical resistance value between cell 10 and current collector 30 can be decreased, and the output voltage from electrochemical cell device 100 can be improved.

### (Third Embodiment)

Hereinafter, a configuration of an electrochemical cell device (hereinafter, referred to as "electrochemical cell device 300") according to a third embodiment will be described. Here, the following mainly describes differences from the configuration of electrochemical cell device 100, and the same explanation will not be described repeatedly.

Electrochemical cell device 300 includes a cell 10, a current collector 20, a current collector 30, an interconnector 40, and an interconnector 50. Cell 10 is warped to protrude from main surface 10b toward main surface 10a. Main surface 20a is provided with a recess 20c, and main surface 30a has a protrusion 30c. Regarding these points, the configuration of electrochemical cell device 300 is the same as the configuration of electrochemical cell device 100.

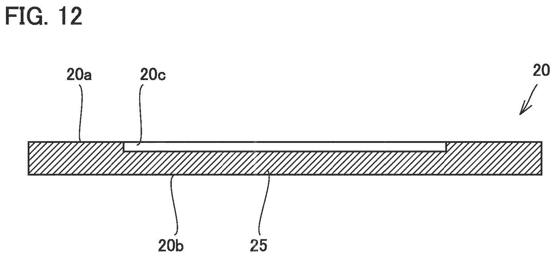

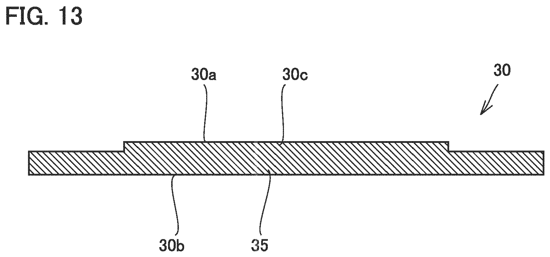

Fig. 12 is a cross sectional view of current collector 20 of electrochemical cell device 300. Fig. 13 is a cross sectional view of current collector 30 of electrochemical cell device 300. As shown in Figs. 12 and 13, each of current collector 20 and current collector 30 is constituted of one metal porous body sheet (metal porous body sheet 25 and metal porous body sheet 35).

It should be noted that each of recess 20c of current collector 20 (metal porous body sheet 25) and protrusion 30c of current collector 30 (metal porous body sheet 35) can be formed by, for example, press working.

Hereinafter, effects of electrochemical cell device 300 will be described.

As with electrochemical cell device 100, since main surface 20a is provided with recess 20c and main surface 30a has protrusion 30c in electrochemical cell device 300, main surface 20a is facilitated to conform to the shape of main surface 10a and main surface 30a is facilitated to conform to the shape of main surface 10b, thereby reducing the spaces between main surface 10a and main surface 20a and between main surface 10b and main surface 30a. As a result, according to electrochemical cell device 300, the contact electrical resistance value between cell 10 and current collector 20 and the contact electrical resistance value between cell 10 and current collector 30 are decreased, and the output voltage from electrochemical cell device 100 can be improved.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

10: cell; 10a, 10b: main surface; 11: solid electrolyte layer; 12: cathode; 13: anode; 14: intermediate layer; 20: current collector; 20a, 20b: main surface; 20c: recess; 21: metal porous body sheet; 22: metal porous body sheet; 22a: through hole; 23: metal porous body sheet; 24: metal porous body sheet; 24a: through hole; 25: metal porous body sheet; 30: current collector; 30a: main surface; 30b: main surface; 30c: protrusion; 31: metal porous body sheet; 32: metal porous body sheet; 32a: through hole; 33, 34, 35: metal porous body sheet; 40: interconnector; 41: groove; 50: interconnector; 51: groove; 100, 200, 300: electrochemical cell device; L: distance; P: apex; T, T1, T2, T3, T4: thickness; WA: warpage amount; Wₘₐₓ: width.

## Claims

1. An electrochemical cell device comprising:
a cell having a first main surface and a second main surface opposite to the first main surface;
a first current collector having a third main surface facing the first main surface; and
a second current collector having a fourth main surface facing the second main surface, wherein
the cell is warped to protrude from the second main surface toward the first main surface,
the third main surface is provided with a recess at a position facing a central portion of the first main surface,
the fourth main surface includes a protrusion at a position facing a central portion of the second main surface,
each of the first current collector and the second current collector is constituted of one or more metal porous body sheets each composed of a metal porous body having a framework with a three-dimensional network structure,
the central portion of the first main surface includes a portion of the first main surface with a longest distance from a flat reference surface when the cell is placed on the reference surface such that the second main surface faces the reference surface, and
the central portion of the second main surface includes a portion of the second main surface with a longest distance from the reference surface when the cell is disposed on the reference surface such that the second main surface faces the reference surface, wherein
the one or more metal porous body sheets of the first current collector are a first metal porous body sheet and a second metal porous body sheet,
the first metal porous body sheet and the second metal porous body sheet are disposed side by side in a plane orthogonal to a thickness direction of the first current collector,
a first through hole is formed in the second metal porous body sheet at a position corresponding to the recess so as to extend through the second metal porous body sheet in a thickness direction of the second metal porous body sheet,
the first metal porous body sheet is disposed in the first through hole,
a thickness of the second metal porous body sheet is more than a thickness of the first metal porous body sheet, and
the recess is defined by an inner peripheral surface of the first through hole and a main surface of the first metal porous body sheet.

2. The electrochemical cell device according to claim 1, wherein a value obtained by subtracting the thickness of the first metal porous body sheet from the thickness of the second metal porous body sheet is equal to a warpage amount of the cell.

3. The electrochemical cell device according to claim 1 or claim 2, wherein
the one or more metal porous body sheets of the second current collector are a third metal porous body sheet and a fourth metal porous body sheet,
the third metal porous body sheet and the fourth metal porous body sheet are disposed side by side in a plane orthogonal to a thickness direction of the second current collector,
a second through hole is formed in the fourth metal porous body sheet at a position corresponding to the protrusion so as to extend through the fourth metal porous body sheet in a thickness direction of the fourth metal porous body sheet,
the third metal porous body sheet is disposed in the second through hole, and
a thickness of the third metal porous body sheet is more than a thickness of the fourth metal porous body sheet.

4. The electrochemical cell device according to claim 3, wherein a value obtained by subtracting the thickness of the fourth metal porous body sheet from the thickness of the third metal porous body sheet is equal to a warpage amount of the cell.

5. The electrochemical cell device according to claim 1 or claim 2, wherein
the one or more metal porous body sheets of the second current collector are a third metal porous body sheet and a fourth metal porous body sheet,
the third metal porous body sheet and the fourth metal porous body sheet are disposed to be stacked on each other such that the fourth metal porous body sheet is located on the fourth main surface side in a thickness direction of the second current collector, and
the fourth metal porous body sheet constitutes the protrusion.

6. The electrochemical cell device according to any one of claims 1 to 5, wherein
the first current collector is a cathode side current collector, and
the second current collector is an anode side current collector.

7. The electrochemical cell device according to claim 6, wherein
the framework of each of the one or more metal porous body sheets of the first current collector contains nickel and cobalt, and
a coating weight of each of the one or more metal porous body sheets of the first current collector is 900 g/m² or less.

8. The electrochemical cell device according to claim 6 or 7, wherein
the framework of each of the one or more metal porous body sheets of the second current collector contains nickel, and
a coating weight of each of the one or more metal porous body sheets of the second current collector is 1000 g/m² or less.

9. The electrochemical cell device according to any one of claims 1 to 8, wherein a value obtained by dividing a warpage amount of the cell by a maximum width of the cell when viewed in a plan view is 1/1000 or more.

10. The electrochemical cell device according to any one of claims 1 to 9, wherein the electrochemical cell device is a solid oxide fuel cell.

11. The electrochemical cell device according to any one of claims 1 to 9, wherein the electrochemical cell device is a solid oxide electrolysis cell.

## Patentansprüche

1. Elektrochemische Zellenvorrichtung, umfassend:
eine Zelle mit einer ersten Hauptfläche und einer zweiten Hauptfläche, die der ersten Hauptfläche gegenüberliegt;
einen ersten Stromabnehmer mit einer dritten Hauptfläche, die der ersten Hauptfläche zugewandt ist; und
einen zweiten Stromabnehmer mit einer vierten Hauptfläche, die der zweiten Hauptfläche zugewandt ist, wobei
die Zelle so gekrümmt ist, dass sie von der zweiten Hauptfläche in Richtung der ersten Hauptfläche vorsteht,
die dritte Hauptfläche mit einer Aussparung an einer Position versehen ist, die einem mittleren Abschnitt der ersten Hauptfläche gegenüberliegt,
die vierte Hauptfläche einen Vorsprung an einer Position umfasst, die einem mittleren Abschnitt der zweiten Hauptfläche gegenüberliegt,
der erste Stromabnehmer und der zweite Stromabnehmer jeweils aus einem oder mehreren metallischen porösen Körperblechen bestehen, die jeweils aus einem metallischen porösen Körper mit einem Gerüst mit einer dreidimensionalen Netzwerkstruktur zusammengesetzt sind,
der mittlere Abschnitt der ersten Hauptfläche einen Abschnitt der ersten Hauptfläche mit einem längsten Abstand zu einer ebenen Referenzfläche umfasst, wenn die Zelle so auf der Referenzfläche angeordnet ist, dass die zweite Hauptfläche der Referenzfläche zugewandt ist, und
der mittlere Abschnitt der zweiten Hauptfläche einen Abschnitt der zweiten Hauptfläche mit einem längsten Abstand zur Referenzfläche umfasst, wenn die Zelle so auf der Referenzfläche angeordnet ist, dass die zweite Hauptfläche der Referenzfläche zugewandt ist, wobei
das eine oder die mehreren metallischen porösen Körperbleche des ersten Stromabnehmers ein erstes metallisches poröses Körperblech und ein zweites metallisches poröses Körperblech sind,
das erste metallische poröse Körperblech und das zweite metallische poröse Körperblech nebeneinander in einer Ebene orthogonal zu einer Dickenrichtung des ersten Stromabnehmers angeordnet sind,
ein erstes Durchgangsloch im zweiten metallischen porösen Körperblech an einer Position entsprechend der Aussparung angeordnet ist, so dass es sich durch das zweite metallische poröse Körperblech in einer Dickenrichtung des zweiten metallischen porösen Körperblechs erstreckt,
das erste metallische poröse Körperblatt im ersten Durchgangsloch angeordnet ist,
eine Dicke des zweiten metallischen porösen Körperblechs größer ist als die Dicke des ersten metallischen porösen Körperblechs, und
die Aussparung durch eine innere Umfangsfläche des ersten Durchgangslochs und eine Hauptfläche des ersten metallischen porösen Körperblechs definiert ist.

2. Elektrochemische Zellenvorrichtung nach Anspruch 1, wobei ein Wert, der durch Subtrahieren der Dicke des ersten metallischen porösen Körperblechs von der Dicke des zweiten metallischen porösen Körperblechs erhalten wird, gleich einer Krümmungsmenge der Zelle ist.

3. Elektrochemische Zellenvorrichtung nach Anspruch 1 oder Anspruch 2, wobei
das eine oder die mehreren metallischen porösen Körperbleche des zweiten Stromabnehmers ein drittes metallisches poröses Körperblech und ein viertes metallisches poröses Körperblech sind,
das dritte metallische poröse Körperblech und das vierte metallische poröse Körperblech nebeneinander in einer Ebene orthogonal zu einer Dickenrichtung des zweiten Stromabnehmers angeordnet sind,
ein zweites Durchgangsloch im vierten metallischen porösen Körperblech an einer Position entsprechend dem Vorsprung gebildet ist, so dass es sich durch das vierte metallische poröse Körperblech in einer Dickenrichtung des vierten metallischen porösen Körperblechs erstreckt,
das dritte metallische poröse Körperblech im zweiten Durchgangsloch angeordnet ist, und eine Dicke des dritten metallischen porösen Körperblechs größer ist als eine Dicke des vierten metallischen porösen Körperblechs.

4. Elektrochemische Zellenvorrichtung nach Anspruch 3, wobei ein Wert, der durch Subtrahieren der Dicke des vierten metallischen porösen Körperblechs von der Dicke des dritten metallischen porösen Körperblechs erhalten wird, gleich einer Krümmungsmenge der Zelle ist.

5. Elektrochemische Zellenvorrichtung nach Anspruch 1 oder Anspruch 2, wobei
das eine oder die mehreren metallischen porösen Körperbleche des zweiten Stromabnehmers ein drittes metallisches poröses Körperblech und ein viertes metallisches poröses Körperblech sind,
das dritte metallische poröse Körperblech und das vierte metallische poröse Körperblech so angeordnet sind, dass sie aufeinander gestapelt sind, so dass das vierte metallische poröse Körperblech auf der vierten Hauptflächenseite in einer Dickenrichtung des zweiten Stromabnehmers angeordnet ist, und
das vierte metallische poröse Körperblech den Vorsprung bildet.

6. Elektrochemische Zellenvorrichtung nach einem der Ansprüche 1 bis 5, wobei
der erste Stromabnehmer ein kathodenseitiger Stromabnehmer ist, und
der zweite Stromabnehmer ein anodenseitiger Stromabnehmer ist.

7. Elektrochemische Zellenvorrichtung nach Anspruch 6, wobei
das Gerüst von jedem des einen oder der mehreren metallischen porösen Körperbleche des ersten Stromabnehmers Nickel und Kobalt enthält, und
ein Beschichtungsgewicht von jedem des einen oder der mehreren metallischen porösen Körperbleche des ersten Stromabnehmers 900 g/m² oder weniger beträgt.

8. Elektrochemische Zellenvorrichtung nach Anspruch 6 oder 7, wobei das Gerüst von jedem des einen oder der mehreren metallischen porösen Körperbleche des zweiten Stromabnehmers Nickel enthält, und
ein Beschichtungsgewicht von jedem des einen oder der mehreren metallischen porösen Körperbleche des zweiten Stromabnehmers 1000 g/m² oder weniger beträgt.

9. Elektrochemische Zellenvorrichtung nach einem der Ansprüche 1 bis 8, wobei ein Wert, der durch Dividieren der Krümmungsmenge der Zelle durch eine maximale Breite der Zelle in Draufsicht erhalten wird, 1/1000 oder mehr beträgt.

10. Elektrochemische Zellenvorrichtung nach einem der Ansprüche 1 bis 9, wobei die elektrochemische Zellenvorrichtung eine Festoxid-Brennstoffzelle ist.

11. Elektrochemische Zellenvorrichtung nach einem der Ansprüche 1 bis 9, wobei die elektrochemische Zellenvorrichtung eine Festoxid-Elektrolysezelle ist.

## Revendications

1. Dispositif de pile électrochimique comprenant :
une pile ayant une première surface principale et une deuxième surface principale opposée à la première surface principale ;
un premier collecteur de courant ayant une troisième surface principale faisant face à la première surface principale ; et
un deuxième collecteur de courant ayant une quatrième surface principale faisant face à la deuxième surface principale, dans lequel
la pile est déformée de façon à faire saillie de la deuxième surface principale vers la première surface principale,
la troisième surface principale est pourvue d'un évidement à une position faisant face à une partie centrale de la première surface principale,
la quatrième surface principale inclut une saillie à une position faisant face à une partie centrale de la deuxième surface principale,
chacun du premier collecteur de courant et du deuxième collecteur de courant est constitué d'une ou plusieurs feuilles de corps poreux métallique, chacune composée d'un corps poreux métallique ayant une ossature avec une structure en réseau tridimensionnelle,
la partie centrale de la première surface principale inclut une partie de la première surface principale où la distance depuis une surface de référence plate est la plus longue lorsque la pile est placée sur la surface de référence de telle sorte que la deuxième surface principale fait face à la surface de référence, et
la partie centrale de la deuxième surface principale inclut une partie de la deuxième surface principale où la distance depuis la surface de référence est la plus longue lorsque la pile est disposée sur la surface de référence de telle sorte que la deuxième surface principale fait face à la surface de référence, dans lequel
les une ou plusieurs feuilles de corps poreux métallique du premier collecteur de courant sont une première feuille de corps poreux métallique et une deuxième feuille de corps poreux métallique,
la première feuille de corps poreux métallique et la deuxième feuille de corps poreux métallique sont disposées côte à côte dans un plan orthogonal à une direction d'épaisseur du premier collecteur de courant,
un premier trou traversant est formé dans la deuxième feuille de corps poreux métallique à une position correspondant à l'évidement de sorte à s'étendre à travers la deuxième feuille de corps poreux métallique dans une direction d'épaisseur de la deuxième feuille de corps poreux métallique,
la première feuille de corps poreux métallique est disposée dans le premier trou traversant,
une épaisseur de la deuxième feuille de corps poreux métallique est supérieure à une épaisseur de la première feuille de corps poreux métallique, et
l'évidement est défini par une surface périphérique interne du premier trou traversant et une surface principale de la première feuille de corps poreux métallique.

2. Dispositif de pile électrochimique selon la revendication 1, dans lequel une valeur obtenue par soustraction de l'épaisseur de la première feuille de corps poreux métallique de l'épaisseur de la deuxième feuille de corps poreux métallique est égale à une quantité de déformation de la pile.

3. Dispositif de pile électrochimique selon la revendication 1 ou la revendication 2, dans lequel
les une ou plusieurs feuilles de corps poreux métallique du deuxième collecteur de courant sont une troisième feuille de corps poreux métallique et une quatrième feuille de corps poreux métallique,
la troisième feuille de corps poreux métallique et la quatrième feuille de corps poreux métallique sont disposées côte à côte dans un plan orthogonal à une direction d'épaisseur du deuxième collecteur de courant,
un deuxième trou traversant est formé dans la quatrième feuille de corps poreux métallique à une position correspondant à la saillie de sorte à s'étendre à travers la quatrième feuille de corps poreux métallique dans une direction d'épaisseur de la quatrième feuille de corps poreux métallique,
la troisième feuille de corps poreux métallique est disposée dans le deuxième trou traversant, et
une épaisseur de la troisième feuille de corps poreux métallique est supérieure à une épaisseur de la quatrième feuille de corps poreux métallique.

4. Dispositif de pile électrochimique selon la revendication 3, dans lequel une valeur obtenue par soustraction de l'épaisseur de la quatrième feuille de corps poreux métallique de l'épaisseur de la troisième feuille de corps poreux métallique est égale à une quantité de déformation de la pile.

5. Dispositif de pile électrochimique selon la revendication 1 ou la revendication 2, dans lequel
les une ou plusieurs feuilles de corps poreux métallique du deuxième collecteur de courant sont une troisième feuille de corps poreux métallique et une quatrième feuille de corps poreux métallique,
la troisième feuille de corps poreux métallique et la quatrième feuille de corps poreux métallique sont disposées pour être empilées l'une sur l'autre de telle sorte que la quatrième feuille de corps poreux métallique est située sur le quatrième côté de surface principale dans une direction d'épaisseur du deuxième collecteur de courant, et
la quatrième feuille de corps poreux métallique constitue la saillie.

6. Dispositif de pile électrochimique selon l'une quelconque des revendications 1 à 5, dans lequel
le premier collecteur de courant est un collecteur de courant côté cathode, et
le deuxième collecteur de courant est un collecteur de courant côté anode.

7. Dispositif de pile électrochimique selon la revendication 6, dans lequel
l'ossature de chacune des une ou plusieurs feuilles de corps poreux métallique du premier collecteur de courant contient du nickel et du cobalt, et
une masse de revêtement de chacune des une ou plusieurs feuilles de corps poreux métallique du premier collecteur de courant est de 900 g/m² ou moins.

8. Dispositif de pile électrochimique selon la revendication 6 ou 7, dans lequel
l'ossature de chacune des une ou plusieurs feuilles de corps poreux métallique du deuxième collecteur de courant contient du nickel, et
une masse de revêtement de chacune des une ou plusieurs feuilles de corps poreux métallique du deuxième collecteur de courant est de 1000 g/m² ou moins.

9. Dispositif de pile électrochimique selon l'une quelconque des revendications 1 à 8, dans lequel une valeur obtenue par division d'une quantité de déformation de la pile par une largeur maximale de la pile lorsqu'elle est observée sur une vue en plan est de 1/1000 ou plus.

10. Dispositif de pile électrochimique selon l'une quelconque des revendications 1 à 9, dans lequel le dispositif de pile électrochimique est une pile à combustible à oxyde solide.

11. Dispositif de pile électrochimique selon l'une quelconque des revendications 1 à 9, dans lequel le dispositif de pile électrochimique est une pile à électrolyse à oxyde solide.
